# EUROPEAN PATENT APPLICATION

(11) **EP 4 664 956 A1**
(43) Date of publication of application: **17.12.2025**
(21) Application number: 23920559.4
(22) Date of filing: 10.02.2023
(51) Int. Cl.: H04W 12/0431, H04L 9/08, H04W 64/00, H04W 12/106

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2023/075546
(87) International publication number: WO 2024/164352

(57) **Abstract**

Embodiments of the present disclosure provide an information processing method and apparatus, a communication device, and a storage medium. The information processing method is executed by a user equipment (UE), and may comprise: sending a first request message to a first network device, wherein the first request message comprises identifier information of the UE, and receiving a first response message of the first network device, wherein the first response message comprises a security key used for protecting an associated multicast message when the UE performs ranging/sidelink (SL) positioning services.

## Description

### TECHNICAL FIELD

The present disclosure relates to, but is not limited to, the field of wireless communication technology, and specifically to a method and an apparatus for processing information, a communication device, and a storage medium.

### BACKGROUND

Based on an agreement of radio access network layer 2 (RAN2), for a ranging/sidelink (SL) positioning application, it is feasible to send part of the SL positioning signaling using groupcast to enable mutual positioning among a plurality of user equipment (UE), thus obtaining a relative distance and/or a relative angle between two or more UEs. Generally, the UE may also be referred to as a terminal.

### SUMMARY

Embodiments of the present disclosure provide a method and an apparatus for processing information, a communication device, and a storage medium.

According to a first aspect of the embodiments of the present disclosure, a method for processing information is provided, performed by a user equipment (UE), including:
sending a first request message to a first network device, in which the first request message includes identifier (ID) information of the UE; and
receiving a first response message from the first network device, in which the first response message includes a security key, and the security key is configured to protect a groupcast message of a ranging/sidelink (SL) positioning application.

According to a second aspect of the embodiments of the present disclosure, a method for processing information is provided, performed by a first network device, including:
receiving a first request message sent by a UE, in which the first request message includes ID information of the UE; and
sending a first response message to the UE, in which the first response message includes a security key, and the security key is configured to protect a groupcast message performing a ranging/SL positioning application.

According to a third aspect of the embodiments of the present disclosure, a method for processing information is provided, performed by a second network device, including:
receiving a third request message sent by a first network device; and
sending a third response message to the first network device according to the third request message, in which the third response message includes a security key of a sender, and the sender is a UE that sends a groupcast message when performing a ranging/SL positioning application.

According to a fourth aspect of the embodiments of the present disclosure, a method for processing information is provided, performed by a ranging/SL positioning server, including:
receiving a second request message sent by a first network device, in which the second request message includes ID information of a UE;
determining whether the UE is authorized to execute a ranging/SL positioning application or to act an expected role according to the second request message, in which the expected role is a role that the UE expects to act when the UE is authorized to perform the ranging/SL positioning application; and
in a case that the UE is authorized to perform the ranging/SL positioning application or to act the expected role, sending a second response message to the first network device.

According to a fifth aspect of the embodiments of the present disclosure, an apparatus for processing information is provided, including:
a first sending module, configured to send a first request message to a first network device, in which the first request message includes ID information of the UE; and
a first receiving module, configured to receive a first response message from the first network device, in which the first response message includes a security key, and the security key is configured to protect a groupcast message of a ranging/SL positioning application.

According to a sixth aspect of the embodiments of the present disclosure, an apparatus for processing information is provided, including:
a second receiving module, configured to receive a first request message sent by a UE, in which the first request message includes ID information of the UE; and
a second sending module, configured to a first response message to the UE, in which the first response message includes a security key, and the security key is configured to perform security protection on a groupcast message when the UE performs a ranging/SL positioning application.

According to a seventh aspect of the embodiments of the present disclosure, an apparatus for processing information is provided, including:
a third receiving module, configured to receive a third request message sent by a first network device; and
a third sending module, configured to send a third response message to the first network device according to the third request message, in which the third response message includes a security key of a sender, in which the sender is a UE that sends a groupcast message when performing a ranging/SL positioning application.

According to an eighth aspect of the embodiments of the present disclosure, an apparatus for processing information is provided, including:
a fourth receiving module, configured to receive a second request message sent by a first network device, in which the second request message includes ID information of a UE;
a determining module, configured to determine whether the UE is authorized to execute a ranging/SL positioning application or to act an expected role according to the second request message, in which the expected role is a role that the UE expects to act when the UE is authorized to perform the ranging/SL positioning application; and
a fourth sending module, configured to, in a case that the UE is authorized to perform the ranging/SL positioning application or to act the expected role, send a second response message to the first network device.

According to a ninth aspect of the embodiments of the present disclosure, a method for processing information is provided, including:
sending, by a UE, a first request message to a first network device, in which the first request message includes ID information of the UE;
receiving, by the first network device, the first request message sent by the UE, in which the first request message includes the ID information of the UE;
sending, by the first network device, a first response message to the UE, in which the first response message includes a security key, and the security key is configured to protect a groupcast message performing a ranging/SL positioning application; and
receiving, by the UE, the first response message from the first network device, in which the first response message includes the security key, and the security key is configured to protect the groupcast message associated when the UE performs the ranging/SL positioning application.

According to a tenth aspect of the embodiments of the present disclosure, a communication system is provided, including:
a UE, configured to implement the method for processing information in any one of technical solutions of the first aspect;
a first network device, configured to implement the method for processing information in any one of technical solutions of the second aspect;
a second network device, configured to implement the method for processing information in any one of technical solutions of the third aspect; and
a ranging/SL positioning server, configured to the method for processing information in any one of technical solutions of the fourth aspect.

According to an eleventh aspect of the embodiments of the present disclosure, a communication device is provided, including a processor, a transceiver, a memory, and an executable program stored on the memory and executable by the processor. When the executable program is executed by the processor, the method for processing information in any one of technical solutions of the first aspect to the fourth aspect and the ninth aspect is implemented.

According to a twelfth aspect of the embodiments of the present disclosure, a computer storage medium for storing an executable program is provided. When the executable program is executed by a processor, the method for processing information in any one of technical solutions of the first aspect to the fourth aspect and the ninth aspect is implemented.

According to the technical solutions in the embodiments of the present disclosure, when the UE requests to perform positioning based on the groupcast message, the UE will send the first request message to the first network device. Thus, after the first network device receives the first request message, the first network device will return the security key for security protecting the groupcast message for positioning. This facilitates a subsequent use of the security key by the UE to protect the groupcasted groupcast message, reduces a problem of tampering and/or eavesdropping the groupcast message, and improves the security of the groupcast message.

It may be understood that an above general description and a following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a structure of a wireless communication system according to an exemplary embodiment.
FIG. 2A is a flowchart illustrating a method for processing information according to an exemplary embodiment.
FIG. 2B is a flowchart illustrating a method for processing information according to an exemplary embodiment.
FIG. 2C is a flowchart illustrating a method for processing information according to an exemplary embodiment.
FIG. 3A is a flowchart illustrating a method for processing information according to an exemplary embodiment.
FIG. 3B is a flowchart illustrating a method for processing information according to an exemplary embodiment.
FIG. 3C is a flowchart illustrating a method for processing information according to an exemplary embodiment.
FIG. 4A is a flowchart illustrating a method for processing information according to an exemplary embodiment.
FIG. 4B is a flowchart illustrating a method for processing information according to an exemplary embodiment.
FIG. 5A is a flowchart illustrating a method for processing information according to an exemplary embodiment.
FIG. 5B is a flowchart illustrating a method for processing information according to an exemplary embodiment.
FIG. 5C is a flowchart illustrating a method for processing information according to an exemplary embodiment.
FIG. 6 is a flowchart illustrating a method for processing information according to an exemplary embodiment.
FIG. 7 is a schematic diagram of a groupcast message according to an exemplary embodiment.
FIG. 8 is a block diagram illustrating an apparatus for processing information according to an exemplary embodiment.
FIG. 9 is a block diagram illustrating an apparatus for processing information according to an exemplary embodiment.
FIG. 10 is a block diagram illustrating an apparatus for processing information according to an exemplary embodiment.
FIG. 11 is a block diagram illustrating an apparatus for processing information according to an exemplary embodiment.
FIG. 12 is a block diagram illustrating UE according to an exemplary embodiment.
FIG. 13 is a block diagram illustrating a network device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

The terms used in embodiments of the present disclosure are solely for the purpose of describing a particular embodiment and are not expected to limit embodiments of the present disclosure. The terms "a/an" and "the" in a singular form used in the present disclosure are also expected to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and similarly, the second information may be referred to as the first information. Depending on the context, words "if" and "in case that" used here may be interpreted as "when", "while", or "in response to determining...".

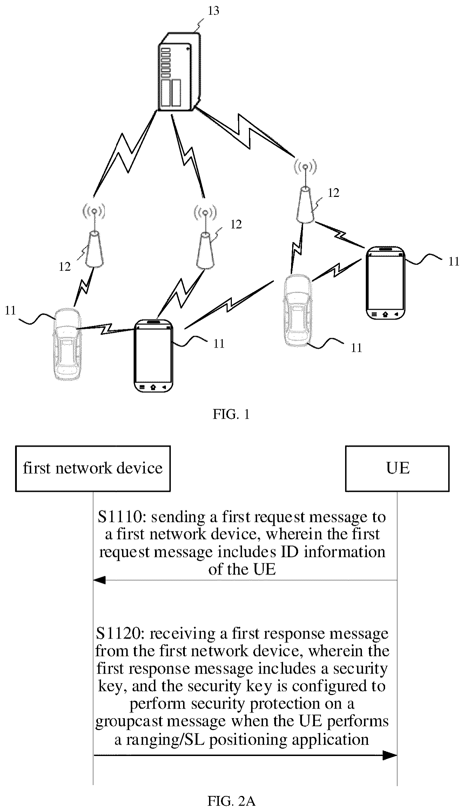

Please refer to FIG. 1, FIG. 1 is a schematic diagram illustrating a structure of a wireless communication system according to an exemplary embodiment of the present disclosure. As shown in FIG. 1, the wireless communication system is a communication system based on a cellular mobile communication technology, and the wireless communication system may include: a plurality of user equipment (UE) 11 and a plurality of access devices 12. In some embodiments, the communication system may further include: one or more core network devices, which are not shown in FIG. 1. The core network devices include, but are not limited to: a mobility management entity (MME) or an access and mobility management function (AMF), etc.

The UE 11 may be a device that provides voice and/or data connectivity to a user. The UE 11 may communicate with one or more core networks via a radio access network (RAN). The UE 11 may be an Internet of Things (IoT) UE, such as a sensor device, a mobile phone, and a computer with the IoT UE. For example, the UE 11 may be a fixed, portable, pocket, handheld, computer built-in or vehicle-mounted device, for example, a station (STA), a subscriber unit, a subscriber station, a mobile station, a mobile, a remote station, an access point, a remote terminal, an access terminal, a user terminal, a user agent, a user device, or a terminal. Or, the UE 11 may be a device for an unmanned aerial vehicle (UAV). Or, the UE 11 may also be a vehicle-mounted device, for example, a vehicle computer with a wireless communication function, or a wireless communication device externally coupled to the vehicle computer. Or, the UE 11 may be a roadside device, such as a street lamp, a signal lamp or other roadside devices with a wireless communication function.

The access device 12 may be a network-side device in a wireless communication system. The wireless communication system may be a 4th generation mobile communication technology (4G) system, also known as a long term evolution (LTE) system; or the wireless communication system may also be a 5th generation mobile communication technology (5G) system, also known as a new radio (NR) system or a 5G NR system; or the wireless communication system may also be a next generation system of the 5G system. An access network in the 5G system may be called as a new generation-radio access network (NG-RAN); or the wireless communication system may also be a machine type communication (MTC) system.

The access device 12 may be an evolved Node B (eNB) in the 4G system, or a next generation node B (gNB) that adopts a centralized distributed architecture in the 5G system. When the access device 12 adopts the centralized distributed architecture, the access device 12 usually includes a central unit (CU) and at least two distributed units (DU). The CU is provided with protocol stacks of a packet data convergence protocol (PDCP) layer, a radio link control (RLC) layer, and a media access control (MAC) layer. The DU is provided with a protocol stack of a physical (PHY) layer. The embodiments of the present disclosure do not limit the specific implementation of the access device 12.

A wireless connection may be set up between the access device 12 and the UE 11 via a radio interface. In different implementations, the radio interface may be a radio interface based on a 4G standard; or the radio interface may be a radio interface based on a 5G standard, for example, the radio interface may be a new radio interface; or the radio interface may also be a radio interface based on a next generation of a mobile communication network technology standard for the 5G.

As a sidelink (SL) positioning capability and SL positioning assistance data are the information used to obtain a ranging result (such as location information), they should be integrity protected against tampering or eavesdropping. The SL positioning capability and the location information concern the privacy of the UE, so they need to be encrypted to protect the privacy of the UE or prevent them against tampering by other illegal devices. In the related art, an SL groupcast signaling sent in a groupcast manner lacks a security protection mechanism, so there is a risk that the signaling may be tampered or privacy information may be eavesdropped. Therefore, in order to enable SL positioning groupcast with security protection, there is a need to study a method for protecting an SL groupcast signaling which is groupcasted by the Ranging/SL positioning capable UE.

As shown in FIG. 2A, the embodiments of the present disclosure provide a method for processing information, performed by UE. The method includes the following steps at S1110 and S1120.

At S1110, a first request message is sent to a first network device, in which the first request message includes identifier (ID) information of the UE.

At S1120, a first response message is received from the first network device, in which the first response message includes a security key, and the security key is configured to perform security protection on a groupcast message when the UE performs a ranging/SL positioning application.

The UE may be any terminal capable of performing positioning between UEs based on the groupcast message. The terminal may include: a mobile phone, a tablet computer, or a wearable device, a smart home device, a smart office device, a vehicle-mounted device, an industrial device, and/or a flying device.

The first network device herein may be a core network device, which includes but is not limited to a proximity service key management function (PKMF), a direct discovery name management function (DDNMF), and/or a policy control function (PCF).

The groupcast message may be any message sent in a groupcast manner and used for mutual positioning between UEs. A sender of the groupcast message sends the groupcast message in a groupcast manner, for example, groupcasting the message on an SL.

The UE performing the method for processing information may be a transmitting UE (or a groupcasting UE, which may be represented by G-UE), that is, a UE that sends the groupcast message, or a receiving UE (which may be represented by R-UE), that is, a UE that receives the groupcast message.

In some embodiments, the UE performing the method for processing information is a G-UE, and the first network device may be a DDNMF/PKMF/PCF serving the G-UE.

In some embodiments, the UE performing the method for processing information is an R-UE, and the first network device may be a DDNMF/PKMF/PCF serving the R-UE.

The DDNMF/PKMF/PCF serving the G-UE may be the same as or different from the DDNMF/PKMF/PCF serving the R-UE. For example, if a public land mobile network (PLMN) to which the G-UE belongs is the same as a PLMN to which the R-UE belongs, the DDNMF/PKMF/PCF serving the G-UE is the same as the DDNMF/PKMF/PCF serving the R-UE. That is, if a communication operator of the G-UE is the same as a communication operator of the R-UE, or the communication operator of the G-UE has a related association relationship (such as cooperation) with the communication operator of the R-UE, the DDNMF/PKMF/PCF serving the G-UE is the same as the DDNMF/PKMF/PCF serving the R-UE. If the PLMN to which the G-UE belongs is different from the PLMN to which the R-UE belongs, the DDNMF/PKMF/PCF serving the G-UE is different from the DDNMF/PKMF/PCF serving the R-UE may be different.

The first request message may be various types of messages that the UE may transmit to the first network device. For example, the first request message may be a ProSe Communication 3a (PC3a) message, a ProSe Communication 8 (PC8) message, or a non-access stratum (NAS) message. For example, the first request message may be a key request message in the PC3a message, the PC8 message, or the NAS message. The PC3a message or the PC8 message refer to messages that may be sent via a PC3a interface or a PC8 interface.

The first request message includes ID information of the UE. The ID information of the UE may be various types of information that may uniquely identify the UE.

For example, the ID information of the UE includes but is not limited to: a user information identifier (User Info ID), or a subscriber permanent identifier (SUPI). Of course, the above are merely examples of the ID information of the UE, and specific implementations are not limited to the above examples. By carrying the ID information of the UE, the first request message allows the first network device to know a UE currently requesting the security key. In some embodiments, the first request message may be a message dedicated to the UE requesting the security key used for positioning based on the groupcast message. In this case, if the first network device, after receiving the message, determines that the received message is the first request message via decoding a message format, etc., it is believed/considered that the UE is requesting the security key.

In other embodiments, the first request message may be an indicator carrying at least a security key used for mutual positioning between UEs based on the groupcast message, or the like.

The security key may be referred to as a security key of the G-UE, that is, a security key of the UE that sends the groupcast message. The security key may also be referred to as a security key of a UE group, that is, the security key belongs to the UE group. Since the security key is configured to protect a groupcast message, the security key may also called a groupcast key.

For example, the security key may include: an integrity key, used for integrity protection of the groupcast message; and/or a confidentiality key, used for encryption and decryption of the groupcast message to provide confidentiality protection for the groupcast message.

In summary, the security key may be used for security protection of the groupcast message, for example, integrity protection and/or confidentiality protection are performed on the groupcast message by using the security key.

In some implementations, if the UE performing the method for processing information is a G-UE, the first response message carries the security key used by the G-UE for integrity protection and/or confidentiality protection of the groupcast message.

In some embodiments, when performing confidentiality protection and/or integrity protection, a symmetric key or an asymmetric key may be used. If the symmetric key is used, both a receiver and a sender of the groupcast message use the same security key. If the asymmetric key is used, the receiver and the sender of the groupcast message use different keys from a key pair. A key pair for an asymmetric algorithm may include: a public key and a private key. For example, the public key is provided to the receiver of the groupcast message, while the private key is provided to the sender of the groupcast message. In this way, a UE within the same UE group that is only authorized to act as the receiver is prevented from sending an unauthorized groupcast message using the symmetric key, thus further enhancing the security of the ranging/SL positioning application based on the groupcast message.

In some implementations, if the UE performing the method for processing information is an R-UE, the first response message carries the security key of the G-UE. The security key may be used to perform related operations such as integrity verification and/or confidentiality protection on the groupcast message groupcast by the G-UE.

Thus, after receiving the first response message, the UE may use the first response message for the security protection of the groupcast message, thus reducing security issues caused by the groupcast message being tampered or the privacy being eavesdropped, and thus enhancing the security of mutual positioning performed between the G-UE and the R-UE based on the groupcast message.

In some embodiments, the first request message includes: indication information, and/or a group ID, and/or a service code of the ranging/SL positioning application, in which the indication information indicates a role that the UE expects to act, and the role includes the sender of the groupcast message and/or the receiver of the groupcast message.

The group ID may identify a UE group where the UE is located, which may be a service group, for example, a service group based on the ranging/SL positioning application.

If the first request message carries a group ID, it indicates that a current operation is a positioning operation related to execution of the ranging/SL positioning application based on the groupcast message. Simultaneously, the group ID may be used by the first network device to determine a security key that is obtained currently. Thus, the group ID serves a dual purpose.

In other embodiments, the first request message may further include a groupcast indicator, which may be used to indicate execution based on the groupcast message when performing the ranging/SL positioning application.

The service code of the ranging/SL positioning application may be a service code identifying the service code of the ranging/SL positioning application. In some embodiments, the service code may also be replaced by address information or the like of the ranging/SL positioning server.

In some embodiments, the role may include: the sender of the groupcast message or the receiver of the groupcast message.

The UE may determine a role it needs to act according to its own capability, configuration of a subscribed service, and/or a current application requirement. For example, if the UE determines that it expects to act as the sender of the groupcast message, the UE may indicate it via the indication information (such as a first indicator) in the first request message. If the UE determines that it expects to act as the receiver of the groupcast message, the UE may indicate it via the indication information (such as a second indicator) in the first request message. Thus, after receiving the indication information, the first network device on the network side may know the role the UE expects or requests to act.

Positioning between UEs may be performed based on a unicast positioning message or based on a groupcast message as mentioned in the embodiments of the present disclosure. In this case, the first request message may provide second indication information, which may include one or more bits indicating whether the UE is currently requesting positioning between UEs based on the groupcast message or the unicast message.

In some embodiments, the communication operator may deploy network devices related to a positioning function. The network devices may perform a basic positioning function to meet a system-level positioning requirement of the UE. For example, when a positioning requirement originates from a network layer of the UE, the UE may request a positioning-related service provided by the communication operator. In some embodiments, in some cases that the positioning requirement may originate from an application layer of the UE, such as a behavior requirement generated based on a specific application (APP), a server providing the positioning application for the APP may be potentially involved.

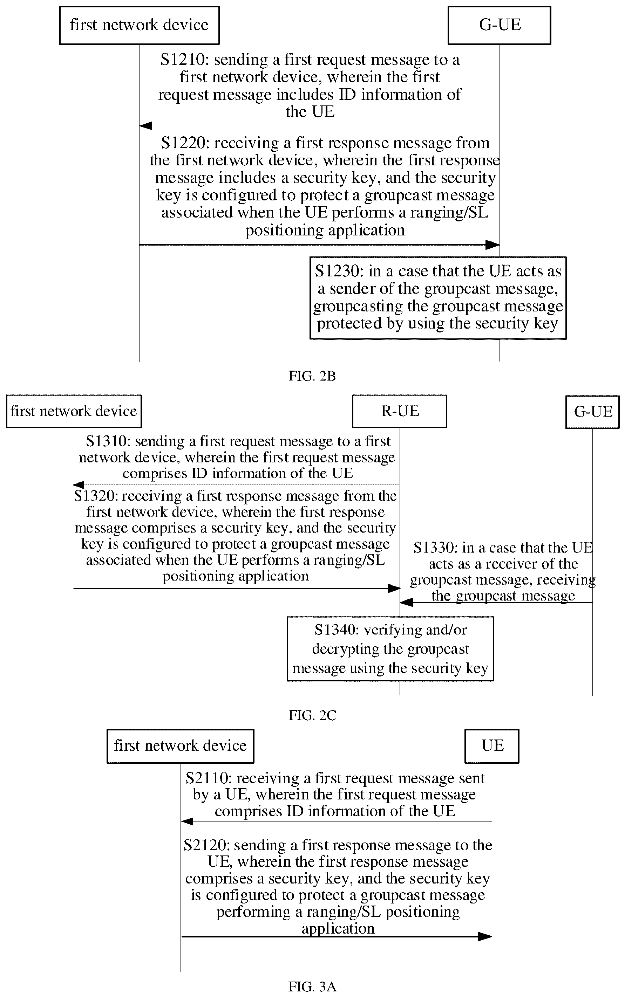

As shown in FIG. 2B, the embodiments of the present disclosure provide a method for processing information, performed by the UE. The method includes the following steps at S1210 to S1230.

At S1210, a first request message is sent to a first network device, in which the first request message includes ID information of the UE.

At S1220, a first response message is received from the first network device, in which the first response message includes a security key, and the security key is configured to protect a groupcast message associated when the UE performs a ranging/SL positioning application.

At S1230, in a case that the UE acts as the sender of the groupcast message, the groupcast message protected by using the security key is groupcasted.

In some embodiments, the UE is authorized to perform the ranging/SL positioning application, that is, the UE is authorized to participate in the ranging/SL positioning application. In this case, whether the UE acts as the sender or the receiver of the groupcast message may be mutually negotiated among UEs in the UE group, without verification by the first network device. In this case, the first request message may carry the above indication information, or may not carry the above indication information.

In other embodiments, the above step S1230 includes: in a case that the UE acts as the sender of the groupcast message when performing the ranging/SL positioning application, groupcasting the groupcast message protected using the security key.

In a case that the UE is authorized to act as the sender of the groupcast message, the UE groupcasts the groupcast message protected using the security key. The UE being authorized to act as the sender of the groupcast message may be: the first network device, the second network device and/or the ranging/SL positioning server authorizing the UE to perform the ranging/SL positioning application, and authorizing the UE to act as the sender of the groupcast message when performing the ranging/SL positioning application.

If the UE acts as the sender of the groupcast message, after the UE receives the security key, the UE may perform integrity protection on the groupcast message using the security key.

In one implementation, performing integrity protection using the security key may include: obtaining a message authentication code (MAC) by performing integrity calculation on part or all of contents of the groupcast message using the security key; and groupcasting a groupcast message including the MAC.

Thus, after an illegal device intercepts the groupcast message, the content protected by the MAC in the groupcast message is tampered and retransmitted. When the receiver with the security key receives the retransmitted groupcast message, the groupcast message may be verified. At this time, a verification failure phenomenon will occur. If the verification fails, a legitimate receiver of the groupcast message will detect that the groupcast message has been tampered.

For example, after receiving the groupcast message, the receiver of the groupcast message computes another MAC using the security key and the groupcast message received, and then compares the computed MAC with the received MAC. If the computed MAC and the received MAC are consistent after matching, it is believed that integrity verification passes and the groupcast message is not tampered; otherwise, it is believed that the integrity verification fails and the groupcast message is tampered.

If an asymmetric key is used, the integrity protection using the security key may include: generating a digital signature using the private key; and groupcasting the groupcast message including the digital signature.

Thus, after receiving the groupcast message, the UE obtains another digital signature by performing integrity verification on the digital signature of the sender of the groupcast message using a public key in an asymmetric key pair. By comparing two digital signatures, if the two digital signatures are consistent after matching, the integrity verification passes; otherwise, the integrity verification fails.

If the UE acts as the sender of the groupcast message, after the UE receives the security key, the UE may perform confidentiality protection on the groupcast message using the security key. Performing confidentiality protection on the groupcast message using the security key may include: converting plaintext content of the groupcast message into ciphertext using the security key; and sending a groupcast message including the ciphertext.

After receiving the groupcast message, the receiver of the groupcast message needs to decrypt the groupcast message using the security key. If the illegal device intercepts the groupcast message, the illegal device may not decrypt the groupcast message since the security key is not owned by the illegal device, thus reducing eavesdropping of the groupcast message.

The groupcast message may include at least a groupcast signaling, which may include one or more of: capability information of the G-UE, indicating a capability of the G-UE, for example, a positioning capability or the like of the G-UE is indicated based on the capability information of the G-UE; or positioning assistance information that may be information related to a location of the G-UE, for example, the positioning assistance information may include absolute position information or the like of the G-UE.

For example, the groupcast signaling may also include: a transmission parameter of a subsequent positioning signal. For example, the transmission parameter may include: indication information of time-frequency domain resources and/or a signal type of a positioning signal, and the like.

In some embodiments, the groupcast message may also include: a group ID. On one hand, the group ID may indicate the receiver of the groupcast message; on the other hand, the group ID may be used by the receiver to determine the security key. For example, the above security key may be allocated per UE group. In this case, different UE groups may receive different security keys from the first network device. Thus, when one UE belongs to two UE groups, the UE may determine a security key for performing security verification on the groupcast message according to the group ID carried in the groupcast message.

In other embodiments, the groupcast message may also include: a key ID of the security key. The key ID may be used by the receiver to determine the security key for verifying the groupcast message.

In some embodiments, the groupcast message may carry either the group ID or the key ID, or simultaneously carry both the group ID and the key ID. For example, the groupcast message may carry the group ID and/or key ID in plaintext.

For example, the groupcast message may be a MAC layer message, i.e., a layer 2 (L2) message. The groupcast message may include a message header and a payload. A header of the L2 message is required to be in plaintext, and the group ID may be thus carried in the header. The groupcast signaling may be carried in the payload section, facilitating the confidentiality protection using the security key, that is, encrypting the payload.

As shown in FIG. 2C, the embodiments of the present disclosure provide a method for processing information, performed by the UE. The method includes the following steps at S1310 to S1340.

At S1310, a first request message is sent to a first network device, in which the first request message includes ID information of the UE.

At S1320, a first response message is received from the first network device, in which the first response message includes a security key, and the security key is configured to protect a groupcast message associated when the UE performs a ranging/SL positioning application.

At S1330, in a case that the UE acts as a receiver of the groupcast message, the groupcast message is received. For example, in a case that the UE is authorized to perform the ranging/SL positioning application, the UE may select to act as the receiver of the groupcast message without authorization of the network device, or the UE is authorized by the network device to perform the ranging/SL positioning application and act an expected role. The expected role is a role that the UE expects/requests to act when the UE performs the ranging/SL positioning application.

At S1340, the groupcast message is verified and/or decrypted using the security key.

For example, the above step S1330 may include: in a case that the UE is authorized to perform the ranging/SL positioning application, it means that the UE is authorized to participate in the ranging/SL positioning application, a role act by the UE does not require authorization from the network device in such an embodiment; and in a case that the UE act as the receiver of the groupcast message when the UE is authorized to perform the ranging/SL positioning application, receiving the groupcast message.

For example, if the groupcast message is encryption protected, the receiver of the groupcast message will decrypt the groupcast message using the security key received from the first network device. If the groupcast message is integrity protected, the receiver of the groupcast message may perform integrity protection on the groupcast message using the security key received from the first network device.

In summary, regardless of whether the UE is the receiver or the sender of the groupcast message, the groupcast message is integrity protected using the security key and/or is encrypted using the security key.

In a case that the groupcast message is integrity protected, the groupcast message includes: an MAC or a digital signature generated based on the security key, the group ID, and the groupcast signaling.

In a case that the groupcast message is confidentiality protected, at least part of the content of the groupcast message is encrypted. Thus, after receiving the groupcast message, the receiver should decrypt an encrypted part (i.e., ciphertext) of the groupcast message to obtain an original plaintext of the groupcast message.

In some embodiments, the groupcast message sent by the G-UE and/or received by the R-UE may include: a group ID; a groupcast signaling; and a key ID used by the receiver of the groupcast message to determine a security key that verifies the groupcast message.

The group identifier, that is, group ID, may identify a UE group where the UE sending and/or receiving the groupcast message is located.

For the groupcast signaling reference may be made to the above embodiments and details will not be repeated here.

The key ID may identify a security key capable of performing the security protection on the groupcast message. The security protection includes: integrity protection and/or encryption protection. If the groupcast message does not carry a key ID, the group ID may also be used by the receiver to determine a security key to perform integrity verification and/or decryption on the groupcast message received.

For example, the key ID and the group ID may be optional contents in the groupcast message.

In some embodiments, the groupcast message may include a plaintext part and a ciphertext part. The plaintext part may include: a destination address and/or a group ID and/or a key ID; and the ciphertext part may include: a groupcast signaling, etc.

In some embodiments, if the groupcast message is integrity protected, the MAC and/or the digital signature is added at an end of the groupcast message. The MAC or the digital signature may perform integrity protection on the groupcast signaling, the key ID, and/or the group ID simultaneously. If the message is tampered in a transmission process, the receiver may detect that the message is tampered via integrity verification corresponding to the MAC or the digital signature. If the receiver has detected that the message is tampered, the groupcast message is discarded to ensure the security of the R-UE.

In some embodiments, in a case that the UE acts as a sender of the groupcast message, the security key is a private key in an asymmetric key pair; or, in a case that the UE is a receiver of the groupcast message, the security key is a public key in an asymmetric key pair.

The public key and the private key are a key pair corresponding to an asymmetric integrity protection algorithm, such as asymmetric encryption or asymmetric integrity protection. The public key is received and stored by the receiver, while the private key is received and stored by the sender of the groupcast message. This reduces a phenomenon that the receiver impersonates a sender that is authorized to send the groupcast message, to send the groupcast message, thus further enhancing the security in an execution process for the ranging/SL positioning application based on the groupcast message.

As shown in FIG. 3A, the embodiments of the present disclosure provide a method for processing information, performed by a first network device. The method includes the following steps at S2110 and S2120.

At S2110, a first request message sent by a UE is received, in which the first request message includes ID information of the UE.

At S2120, a first response message is sent to the UE, in which the first response message includes a security key, and the security key is configured to protect a groupcast message performing a ranging/SL positioning application.

The first network device may be a core network device, including but not limited to a PKMF, a DDNMF, or a PCF.

The first request message may come from the UE that expects or requests to act as a sender of the groupcast message, or from UE that expects or requests to act as a receiver of the groupcast message.

After receiving the first request message from the UE, to ensure the security of the groupcast message in a subsequent positioning process between UEs, the security key is delivered to the UE via the first response message.

The security key may be generated based on a first request message of the G-UE and is a security key of the G-UE.

The security key may include at least one of: an integrity key of the UE group; or a confidentiality key of the UE group.

For example, the first request message further includes: indication information, and/or a group ID, and/or a service code of the ranging/SL positioning application, in which the indication information indicates a role that the UE expects to act, in which the role includes: the sender of the groupcast message; and/or the receiver of the groupcast message.

In some embodiments, the role may include at least: the sender of the groupcast message and the receiver of the groupcast message.

The UE may determine a role it needs to act according to its own capability, configuration of a subscribed service, and/or a current application requirement. For example, if the UE determines that it expects to act as the sender of the groupcast message, the UE may indicate it via the indication information in the first request message. If the UE determines that it expects to act as the receiver of the groupcast message, the UE may indicate it via the indication information (such as a second indicator) in the first request message. Thus, after receiving the indication information, the first network device on the network side may know the role the UE expects or requests to act.

In some embodiments, the third indication information includes: a service code of the positioning application, or an indicator of the positioning function.

The positioning application in the embodiments of the present disclosure may include: a service related to relative positioning between UEs and/or related to absolute positioning of the UE that performs based on the relative positioning between UEs. For example, relative position information between UEs is obtained by a relative positioning application, and includes but is not limited to a relative distance and/or a relative angle. The absolute positioning may be used to determine absolute position information of another UE based on known position information of one UE. Typical absolute position information includes but is not limited to a latitude and a longitude, and/or a coordinate value in a world coordinate system, etc.

The positioning application includes but is not limited to: the ranging/SL positioning application and/or other service.

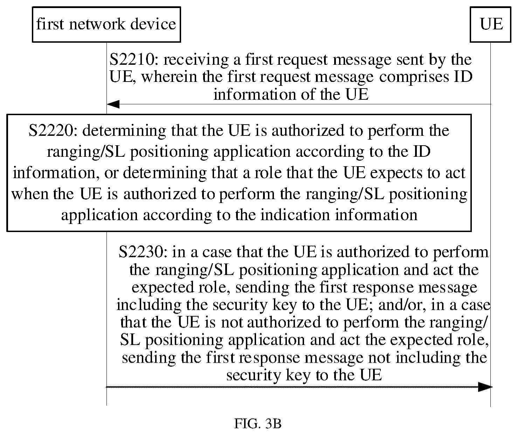

As shown in FIG. 3B, the embodiments of the present disclosure provide a method for processing information, performed by the first network device. The method includes the following steps at S2210 to S2230.

At S2210, a first request message sent by the UE is received, in which the first request message includes ID information of the UE.

At S2220, it is determined according to the ID information that the UE is authorized to perform the ranging/SL positioning application, or a role that the UE expects to act when the UE is authorized to perform the ranging/SL positioning application is determined according to the indication information.

At S2230, in a case that the UE is authorized to perform the ranging/SL positioning application and act the expected role, a first response message including the security key is sent to the UE; and/or, in a case that the UE is not authorized to perform the ranging/SL positioning application and act the expected role, a first response message not including the security key is sent to the UE.

In some embodiments, the first network device may authorize whether the UE sending the first request message may act the role the UE requests or expects to act based on locally stored subscription information of various UEs, locally stored coarse information, and/or an authorization rule.

In other embodiments, the first network device may also authorize the UE sending the first request message by interacting with other devices.

The authorization of the UE sending the first request message by the first network device may reduce a phenomenon that the illegal UE forges the first request message to request the security key, thus alleviating a security issue of the security key.

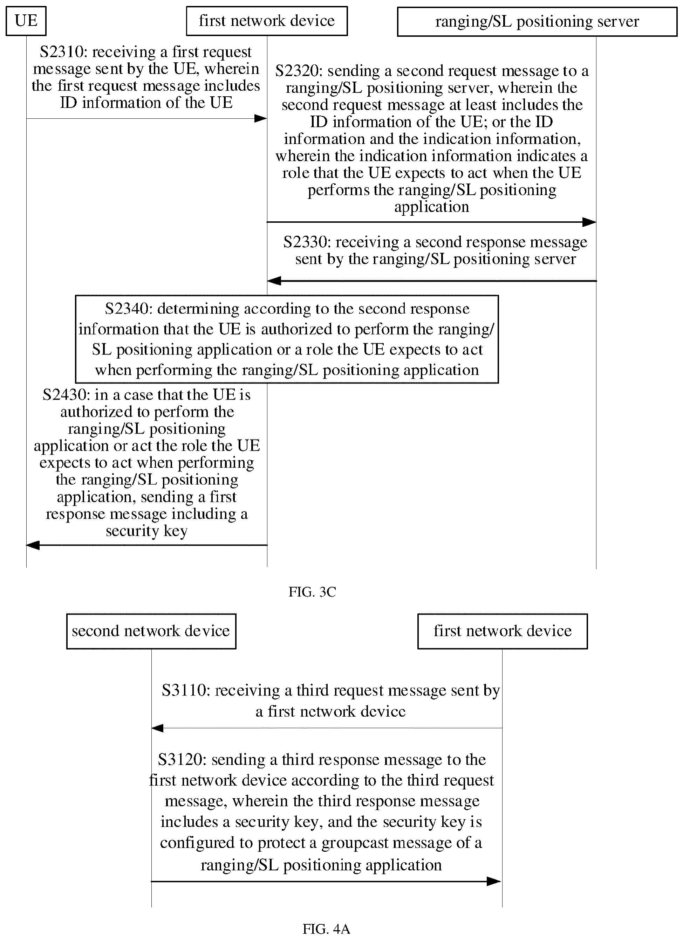

As shown in FIG. 3C, the embodiments of the present disclosure provide a method for processing information, performed by the first network device. The method includes the following steps at S2310, S2320, S2330, S2340, and S2430.

At S2310, a first request message sent by the UE is received, in which the first request message includes ID information of the UE.

At S2320, a second request message is sent to a ranging/SL positioning server, in which the second request message at least includes: the ID information of the UE; or the ID information and the indication information, in which the indication information indicates a role that the UE expects to act when the UE performs the ranging/SL positioning application.

At S2330, a second response message sent by the ranging/SL positioning server is received.

At S2340, it is determined according to the second response information that the UE is authorized to perform the ranging/SL positioning application or a role the UE expects to act when performing the ranging/SL positioning application.

At S2430, in a case that the UE is authorized to perform the ranging/SL positioning application or act the role the UE expects to act when performing the ranging/SL positioning application, a first response message including a security key is sent.

The ranging/SL positioning server is configured to determine whether to authorize the UE to act the role the UE expects or requests to act.

For example, the first request message is sent based on a positioning application. When it is determined whether the UE is authorized to act the role the UE expects or requests to act, the ranging/SL ranging/SL positioning server or an application function (AF) may first authorize whether the UE is authorized to participate in the ranging/SL positioning application, and then authorize whether the UE is authorized to act the role the UE expects or requests to act in the ranging/SL positioning application. For example, in some cases, some UE may participate in the ranging/SL positioning application but only be authorized to act as the receiver of the groupcast message, while other UE may be authorized not only as the receiver of the groupcast messages but also as the sender of the groupcast message. Therefore, for example, if the UE is authorized to act its expected role when performing the ranging/SL positioning application, the first response message including the security key is sent to the UE.

In some embodiments, the method further includes: in a case that the UE is authorized to act as the sender of the groupcast message, generating the security key; or in a case that the UE is authorized to act as the sender of the groupcast message, generating, by the first network device, a parameter based on the group ID or the like according to a key generation algorithm, and generating the security key for the UE group to be used by the sender and/or the receiver of the groupcast message. In this case, the first network device does not need to request the security key from other devices.

In some embodiments, based on the method shown in FIG. 3C, when the UE is authorized to act as the receiver of the groupcast message, the second response message further includes: sender information of the groupcast message, in which the sender information is used by the first network device to determine a second network device configured to obtain the security key.

The sender information may include, but is not limited to: ID information of the sender and/or an address of a DDNMF, a PKMF, and/or a PCF serving the sender.

The ID information of the sender may include an ID of the PLMN of the sender. In this case, the DDNMF/PKMF/PCF of the R-UE may receive sender information of one or more G-UE from the ranging/SL positioning server or a third network device.

Thus, after receiving the sender information, the DDNMF/PKMF/PCF of the R-UE may request a security key of the G-UE from the DDNMF/PKMF/PCF serving the one or more G-UE according to the ID of the PLMN included in the sender information.

Therefore, in some embodiments, the method further includes: when the UE is authorized to act as the receiver of the groupcast message, obtaining a security key of the sender of the groupcast message.

For example, in a case that the UE is authorized to act as the receiver of the groupcast message, the security key of the sender stored by the first network device is obtained.

For example, the first network device locally stores security keys of one or more G-UE. In this case, the first network device may send its locally stored security key to the UE that is authorized to act as the G-UE via the first response message.

For another example, the first network device does not locally store the security key of the G-UE. In this case, the first network device may request the security key of the G-UE from other network devices.

In some embodiments, a UE that requests or expects to act as the R-UE requests the security key of the G-UE based on a positioning function. In this case, the first network device may store the security key of the G-UE and thus does not need to request the security key from other network devices. That is, in some embodiments, if the first request message includes an indicator of the positioning function, the first network device stores security keys of one or more G-UEs corresponding to the first network device itself and may directly provide the stored security keys of one or more G-UEs to the UE via the first response message.

In some other embodiments, if the UE that requests or expects to act as the R-UE requests the security key of the G-UE based on the positioning application, even if the first network device stores the security key itself, the sender information of one or more G-UE may be returned according to the ranging/SL positioning server. If the UE that requests or expects to act as the R-UE and the G-UE belong to different PLMNs or have different serving DDNMFs/PKMFs/PCFs, the first network device may request the security key of the G-UE from a second network device in another PLMN.

Therefore, obtaining the security key of the sender stored by the first network device when the UE is authorized to act as the receiver of the groupcast message includes: when the UE acts as the receiver of the groupcast message and the first network device does not store the security key of the sender, or when the UE acts as the receiver of the groupcast message and the first request message includes a service code or a service function indicator of the positioning application, sending a third request message to the second network device according to the sender information; and receiving a third response message returned by the second network device, in which the third response message includes the security key of the sender.

In summary, the first network device may locally obtain the security keys of one or more G-UE, and/or obtain the security keys of one or more G-UE from the second network device, according to a specific scenario.

As shown in FIG. 4A, the embodiments of the present disclosure provide a method for processing information, performed by a second network device. The method includes the following steps at S3110 to S3120.

At S3110, a third request message sent by a first network device is received.

At S3120, a third response message is sent to the first network device according to the third request message, in which the third response message includes a security key, and the security key is configured to protect a groupcast message of a ranging/SL positioning application.

The second network device may also be a core network device.

The core network device may include but not limited to a DDNMF, a PKMF, or a PCF of G-UE.

In this case, the first network device may be a DDNMF, a PKMF, or a PCF of R-UE.

For example, when the R-UE and the G-UE belong to different PLMNs, the first network device of the R-UE sends the third request message, which may be a key request message, configured to send the third request message to the second network device according to sender information provided by the ranging/SL positioning server when the first network device of the R-UE receives a first request message including a service code. Therefore, after receiving the third request message, the second network device will carry a security key of the G-UE in the third response message and send it to the first network device. The first network device will further send the security key of the G-UE to a corresponding R-UE, enabling the R-UE to perform security verification on the groupcast message received.

In some embodiments, the third request message at least includes: ID information of the receiver, which may be for example, an Info ID or an SUPI of the R-UE, and facilitates the second network device to determine which UE is currently prepared to request to be a receiver of a positioning reference signal (PRS).

In some embodiments, if the second request message comes from the first network device, and the first network device and the second network device both belong to the core network device, there is a mutual trust relationship between the first and second network devices. At this time, the second network device may not authorize the UE requesting to act as the R-UE and may directly send the retrieved security keys of one or more G-UE to the first network device.

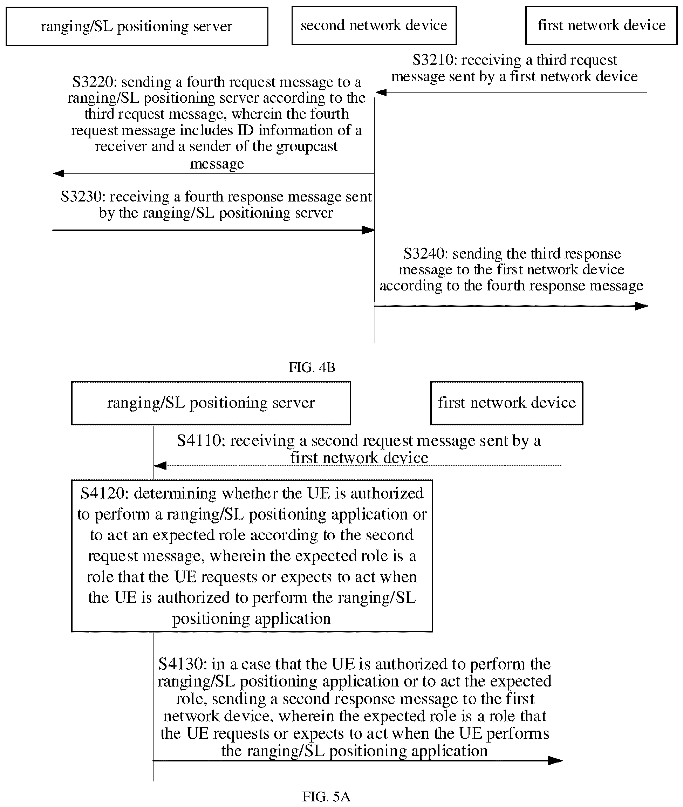

As shown in FIG. 4B, the embodiments of the present disclosure provide a method for processing information, performed by the second network device. The method includes the following steps at S3210 to S3240.

At S3210, a third request message sent by a first network device is received.

At S3220, a fourth request message is sent to a ranging/SL positioning server according to the third request message, in which the fourth request message includes: ID information of the receiver and ID information of a sender of the groupcast message.

At S3230, a fourth response message sent by the ranging/SL positioning server is received.

At S3240, the third response message is sent to the first network device according to the fourth response message.

In this embodiment, the second network device may receive the ID information of the UE that is requests to act as the R-UE, and may also receive the ID information of the G-UE. Thus, the second network device may further authorize whether the UE has permission to receive a groupcast message groupcast by one or more specified G-UE. In the authorization, the second network device may send the fourth request message to the ranging/SL positioning server, so that the ranging/SL positioning server may determine whether the R-UE is authorized to request and receive the groupcast message of the G-UE for a requested service. An authorization result of the ranging/SL positioning server is returned to the second network device via the fourth response message. The second network device will return the third response message to the first network device according to the fourth response message.

In some embodiments, sending the third response message to the first network device according to the fourth response message includes:
in a case that the fourth response message indicates that authorization is passed, sending the third response message including a security key of the sender to the first network device; or, in a case that the fourth response message indicates that the authorization is not passed, not sending a response message that does not include the security key of the sender to the first network device.

The authorization being passed may be understood as: a UE sending the first request message is authorized to act as the R-UE when performing the ranging/SL positioning application, or the UE sending the first request message is authorized to receive the groupcast message sent by the sender indicated by the fourth request message when performing the ranging/SL positioning application.

The authorization being passed may be understood as an authorization success. The authorization being not passed may be understood as an authorization failure.

Further, if the fourth response message indicates that the authorization is passed, a response success message is sent to the first network device, and the response success message carrying the security key is transmitted to the first network device.

If a response message sent by the second network device may indicate that the authorization is not passed via a failure indication or a failure reason. Thus, when the first network device receives the fourth response message including the failure indication or the failure reason, it is also easy for the first network device to know that the authorization is not passed.

As shown in FIG. 5A, the embodiments of the present disclosure provide a method for processing information, performed by a ranging/SL positioning server. The method includes the following steps at S4110 to S4130.

At S4110, a second request message sent by a first network device is received.

At S4120, it is determined according to the second request message whether the UE is authorized to perform a ranging/SL positioning application or to act an expected role, in which the expected role is a role that the UE requests or expects to act when the UE is authorized to perform the ranging/SL positioning application.

At S4130, in a case that the UE is authorized to perform the ranging/SL positioning application or to act the expected role, a second response message is sent to the first network device, in which the expected role may be a role that the UE expects/requests to act when the UE performs the ranging/SL positioning application.

The ranging/SL positioning server may be at least one of: a service server or an AF, which may be located inside or outside a core network; a server providing the positioning application, and/or a service server generating a demand positioning application. For example, the service server may include: the ranging/SL positioning server.

If the first network device receives the first request message, it may perform authorization by sending the second request message to the ranging/SL positioning server.

The second request message is sent based on the first request message, and the second request message at least includes: ID information of the UE carried by the first request message. The ID information of the UE may include: an SUPI and/or a User Info ID, etc.

In some embodiments, the second request message further includes at least one of: indication information; a group ID; or a service code of the ranging/SL positioning application, in which the indication information indicates a role that the UE expects to act, in which the role includes: a sender of the groupcast message; and/or a receiver of the groupcast message.

The ID information of the UE included in the second request message may be ID information of a UE that requests to act as the R-UE, or ID information of a UE that requests to act as the G-UE. Therefore, the first network device may be a serving DDNMF/PKMF/PCF of the UE that requests to act as the R-UE. The first network device may also be the serving DDNMF/PKMF/PCF of the UE that requests to act as the G-UE.

After receiving the second request message, the ranging/SL positioning server may obtain a first authorization result by querying its own database record or an authorization policy. After obtaining the first authorization result, the ranging/SL positioning server returns the first authorization result carried in the second response message to the first network device.

The first authorization result may indicate whether the UE identified by the ID information carried in the second request message is authorized to act as the R-UE or G-UE that the UE requests to act.

For example, the first authorization result may include one or more bits. One bit value of the one or more bits may indicate that the authorization is passed, and another bit value may indicate that the authorization is not passed.

Thus, by authorizing the role that the UE requests or expects to act, the security of positioning between UEs is ensured based on the groupcast message.

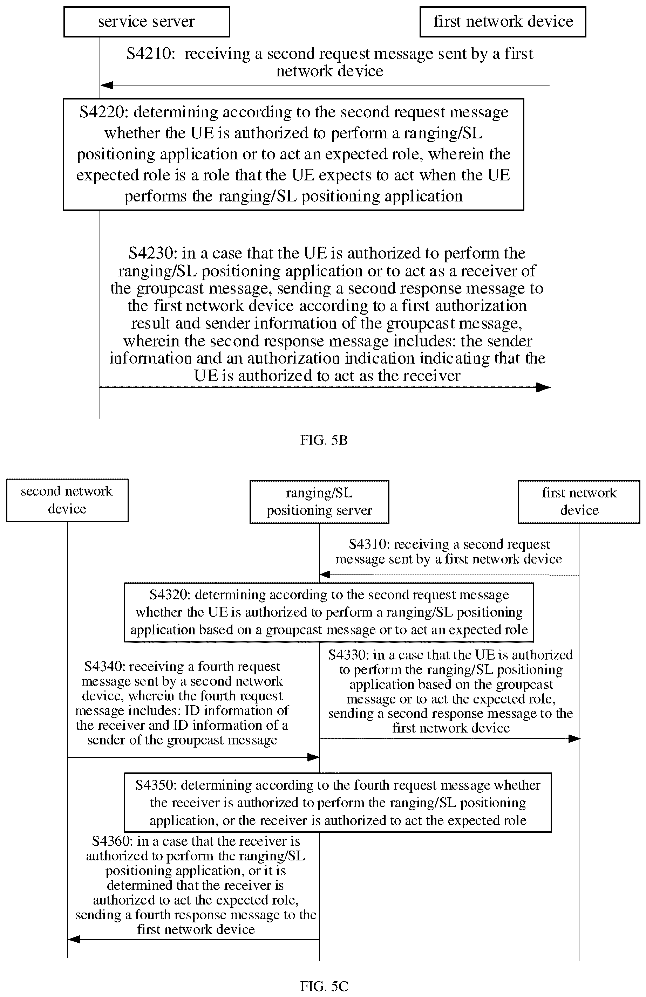

As shown in FIG. 5B, the embodiments of the present disclosure provide a method for processing information, performed by the ranging/SL positioning server. The method includes the following steps at S4210 to S4230.

At S4210, a second request message sent by a first network device is received.

At S4220, it is determined according to the second request message that the UE is authorized to perform a ranging/SL positioning application based on the groupcast message or to act an expected role, in which the expected role is a role that the UE expects to act when the UE performs the ranging/SL positioning application.

At S4230, in a case that the UE is authorized to perform the ranging/SL positioning application or to act as a receiver of the groupcast message, a second response message is sent to the first network device according to a first authorization result and sender information of the groupcast message, in which the second response message includes: the sender information and an authorization indication indicating that the UE is authorized to act as the receiver.

In the embodiments of the present disclosure, when ID information of the UE included in the second request message is requesting to act as the R-UE, and the UE is authorized to act as the R-UE, the ranging/SL positioning server may further return the sender information to the first network device via the second response message. The sender information may include ID information authorized to act as a sender of a groupcast message, area information, and/or a transmission parameter of the groupcast message, etc.

Carrying the sender information authorized to act as the sender of the G-UE in the second response message and returning it to the first network device facilitate secure interaction of the groupcast message for the ranging/SL positioning application between the G-UE and the R-UE across an PLMN.

In some embodiments, when the UE is not authorized to perform the ranging/SL positioning application or is not authorized to act as the receiver of the groupcast message, a response message indicating that the authorization is not passed is sent.

As shown in FIG. 5C, the embodiments of the present disclosure provide a method for processing information, performed by the ranging/SL positioning server. The method including the following steps at S4310 to S4360.

At S4310, a second request message sent by a first network device is received.

At S4320, it is determined according to the second request message whether the UE is authorized to perform a ranging/SL positioning application based on a groupcast message or to act an expected role.

At S4330, in a case that the UE is authorized to perform the ranging/SL positioning application based on the groupcast message or to act the expected role, a second response message is sent to the first network device.

At S4340, a fourth request message sent by a second network device is received, in which the fourth request message includes: ID information of the receiver and ID information of a sender of the groupcast message.

At S4350, it is determined according to the fourth request message whether the receiver is authorized to perform the ranging/SL positioning application, or the receiver is authorized to act the expected role.

At S4360, in a case that the receiver is authorized to perform the ranging/SL positioning application, or it is determined that the receiver is authorized to act an expected role, a fourth response message is sent to the first network device.

For example, if the UE is not authorized to act the expected role when performing the ranging/SL positioning application based on the groupcast message, the response message indicating that the authorization is failed is sent to the first network device. In the embodiments of the present disclosure, if the ranging/SL positioning server is the service server or the AF, etc., it may involve the second network device. In some cases, the first network device may obtain a first authorization result by performing a first authorization on a device that requests or expects to act as the R-UE. The serving DDNMF/PLMF/PCF of the G-UE will send the fourth request message to the ranging/SL positioning server after receiving a third request. The fourth request message will carry both the ID information of the sender and the ID information of the receiver. Thus, in combination with the fourth request message, a second authorization result is obtained by determining whether the receiver is authorized to receive the groupcast message of the sender. After obtaining the second authorization result, the fourth response message may be sent to the first network device. The authorization based on the fourth request message may be a second authorization or re-check.

In the embodiments of the present disclosure, the fourth response message may include: a response success message, including an authorization indication indicating that the authorization is successful, which may also be understood that the authorization is passed; and a response failure message, including a failure indication and/or a failure reason indicating that the authorization is not passed, which may also be understood that the authorization is not passed.

The embodiments of the present disclosure ensures that the UE is equipped with a security key for protecting or verifying a groupcasted SL groupcast signaling against tampering or eavesdropping.

For a group of UEs, when one of the UEs in the group needs to groupcast a sidelink positioning protocol (SLPP) signaling and the rest of the UEs need to receive the SLPP signaling, they are normally performing groupcasting and receiving for the group of the same ranging/SL positioning application. Otherwise, when a UE expecting service A receives a groupcasted SLPP signaling for service B, the signaling (e.g., positioning assistance information) may be not be of any use for the R-UE, and the information of the G-UE for the service A will be unnecessarily exposed to the R-UE for the service B, which leads to a privacy issue. In addition, the UE group may perform group management for groupcast at an application layer, which may provide group ID information to the ranging/SL positioning layer. Therefore, it is expected that SLPP signaling groupcast is associated with a specific group managed by a specific ranging/SL positioning application/service. To enable the groupcast protection per group and per Ranging/SL positioning application, it is proposed to associate the security keys for groupcast with the group ID (indicating the specific group) and a ranging/SL positioning application code (RSSC).

For the ranging/SL positioning application, each pair of UEs needs to discover each other to set up unicast communication for exchanging the SLPP signaling. The discovery messages are broadcasted or groupcasted by the UE, and the security of the discovery messages is protected with discovery security materials provided by the network. For a ranging/SL positioning capable UE, it should be able to groupcast the SLPP signaling without having to establish a unicast connection, hence no need of performing discovery between the UEs. However, the procedure for provisioning the discovery security materials by the network may be adapted to provisioning security keys for SLPP groupcast protection. The SLPP signaling may be one of the above groupcast signalings.

Furthermore, it is mostly possible that two or more UEs involved in the ranging/SL positioning application may not be subscribed with the same operator. It is proposed that a 5 generation core (5GC) network function (NF) of the G-UE in one PLMN generates the groupcast keys, and a 5GC NF of the R-UE in another PLMN obtains the groupcast keys from a generating 5GC NF. The 5GC NF of the R-UE finds the key generating 5GC NF of the G-UE based on G-UE information (including a PLMN ID of the G-UE) provided by the ranging/SL positioning server.

The groupcast keys obtained by group members may be symmetric or asymmetric keys. To prevent one receiver in the group from impersonating the sender/groupcaster of the groupcast message in the group, it is recommended to create asymmetric key pairs for the SLPP signaling groupcast, of which the private key is provisioned to the groupcaster of groupcast message and the public key is provisioned to the receiver.

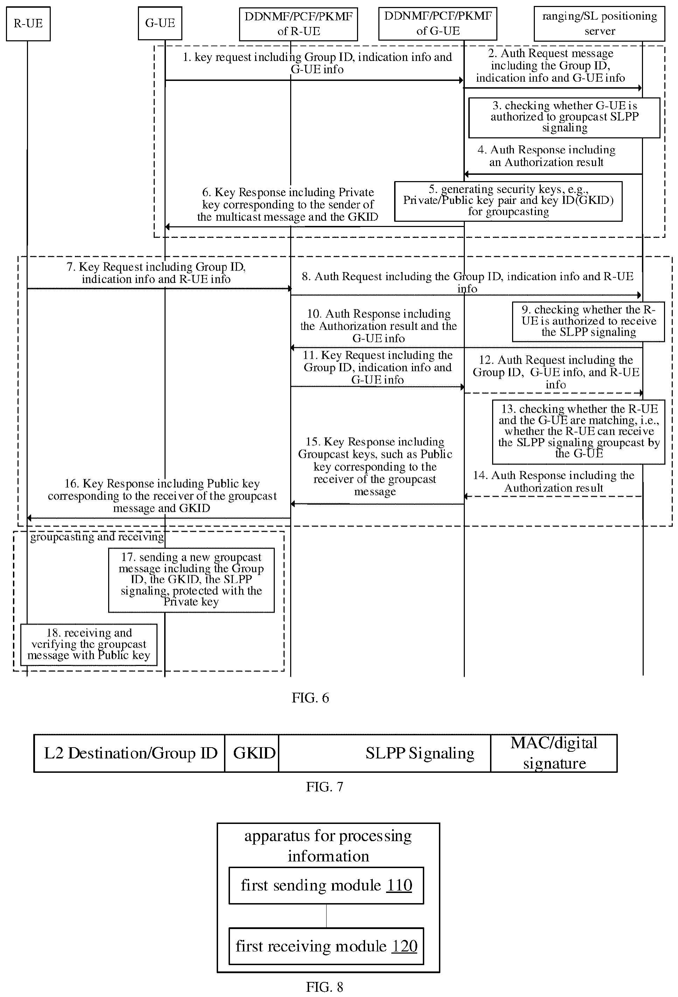

It is assumed that the UEs in a group are all provisioned a group ID allocated by the ranging/SL positioning application, and the group ID includes a service ID of a specific ranging/SL positioning application. As shown in FIG. 6, the embodiments of the present disclosure provide a method for processing information, including the following steps 1-18.

1. The UE intending (or planning) to groupcast an SLPP signaling (G-UE) sends a Key Request message to its PKMF/DDNMF/PCF. The message includes at least Group ID, G-UE info, an indicator of the UE as a groupcaster. The ranging/SL positioning server is enabled to check whether the G-UE is authorized to perform SLPP signaling groupcast for a Group of the ranging/SL positioning application indicated by the Group ID. The ranging/SL positioning server may be a server that provides the ranging/SL positioning application. The SLPP signaling is one of the above groupcast signalings.

5. The PKMF/DDNMF/PCF of the G-UE generates groupcast keys by associating the keys with the Group ID, i.e., the groupcast keys of one group cannot be used by another group. A groupcast key identifier (GKID) is also generated to identify the keys. The PKMF/DDNMF/PCF of the G-UE stores the groupcast keys associated with the Group ID. The groupcast keys may be asymmetric key pairs (Private/Public keys), of which the Private key is to be sent to the sender/groupcaster of the group and the Public key is to be sent to the receivers of the group.

6. The PKMF/DDNMF/PCF of the G-UE responds to the G-UE by the groupcast keys (e.g. Private key) and the GKID.

7. The UE intending to receive the groupcast SLPP signaling (R-UE) sends a Key Request message to its PKMF/DDNMF/PCF. The message includes at least the Group ID, R-UE info, an indicator of the UE as a groupcast receiver.

8~10. The PKMF/DDNMF/PCF of the R-UE checks with the ranging/SL positioning server whether the R-UE is authorized to receive the groupcasted SLPP signaling for the Group of the ranging/SL positioning application indicated by the Group ID. In addition to an Authorization Result, the ranging/SL positioning server also provides the G-UE info of the Group to the PKMF/DDNMF/PCF of the R-UE.

11. If the authorization succeeds, the PKMF/DDNMF/PCF of the R-UE sends a Key Request to the PKMF/DDNMF/PCF of the G-UE. If the G-UE and the R-UE are served by the same PKMF/DDNMF/PCF, the step may be skipped. If the G-UE and the R-UE are served by different PKMFs/DDNMFs/PCFs, the PKMF/DDNMF/PCF of the R-UE finds the PKMF/DDNMF/PCF of the G-UE based on G-UE info (including an PLMN ID of the G-UE) received from the ranging/SL positioning server. The Key Request includes at least the Group ID, the R-UE info, the indicator of the UE as a receiver.

12~14. Optionally, the PKMF/DDNMF/PCF of the G-UE may check with the ranging/SL positioning server whether the G-UE and the R-UE are matching for groupcasting and receiving the SLPP signaling in the Group. The key request includes at least the Group ID, the G-UE info, information of the R-UE.

15. If the check with the ranging/SL positioning server succeeds, the PKMF/DDNMF/PCF of the G-UE responds to the PKMF/DDNMF/PCF of the R-UE with the groupcast keys (e.g. Public key) and the GKID. If the G-UE and the R-UE are served by the same PKMF/DDNMF/PCF, this step may be skipped.

16. The PKMF/DDNMF/PCF of the R-UE provides the groupcast keys (e.g. Public key) and the GKID to the R-UE.

17. The G-UE starts to groupcast SLPP signaling which is protected by the group keys (Private key) received from the network. The groupcast message includes at least the Group ID, the GKID, and the SLPP signaling.

18. The R-UE starts to monitor the groupcast messages. When receiving the groupcasted signaling from the G-UE, the R-UE retrieves the groupcast keys using the GKID received from the G-UE and then verifies the groupcast message with the groupcast keys (e.g. Public key) received from the network.

For protecting the groupcast message, referring to FIG. 7, the G-UE performs the following steps 1-4:
1. An SLPP message is formed that may include an SLPP header and an SLPP payload.
   The SLPP header may include: ID information of the Group ID and the GKID. The SLPP payload may include SLPP signaling.
2. the SLPP payload (SLPP signaling) is encrypted using the group key (e.g. private key or encryption key).
3. the MAC of the SLPP message (GKID+SLPP signaling) is calculated using the group key (e.g. private key or integrity key).
4. an L2 message is formed by including the protected SLPP message (SLPP message + MAC) as the L2 payload and an L2 header is appended, in which the L2 header may include: a destination address, and the Group ID.

For receiving and verifying the protected groupcast message, the R-UE performs the following steps 1-4.
1. the groupcast message for an expected group is received by identifying the L2 Destination/Group ID, which is mapped from the group ID allocated by the application layer.
2. the groupcast keys for verification is retrieved by identify the GKID in the received message.
3. the message is verified by checking the MAC of the received message using the groupcast key (e.g. public key or integrity key). This is to ensure that the GKID and the SLPP signaling are not tampered during groupcasting.
4. the encrypted SLPP payload is decrypted using the groupcast key (e.g. public key or encryption key).

It is possible that the L2 Destination/Group ID may be tampered because the UE cannot protect the L2 header which is below a PDCP layer. But even if the L2 Destination/Group ID is tampered by an attacker, the R-UE is able to detect the attack because the integrity protected GKID is associated with the Group ID. When the R-UE detects that the Group ID associated with the GKID is not identical to the Group ID mapped from the L2 Destination ID, the R-UE will drop the received message.

If the groupcast keys are symmetric keys (the groupcaster and receivers in the group sharing the same key), there is a risk that the receiver in the group may impersonate the groupcaster in the group. If the groupcast keys are symmetric keys (the groupcaster holding the private key and the receiver holding the public key), it is not possible for the receiver in the group to impersonate the sender of groupcast. Therefore, it is recommended to generate asymmetric keys for SLPP signaling groupcast.

The UE shall be able to request the groupcast keys for the SLPP signaling from the network (PKMF/DDNMF/PCF). The groupcast keys may be security keys for performing security protection of the groupcast message.

The UE shall be able to include the Group ID, its own info, and the indicator of the UE as a groupcaster or receiver in the request message.

The UE shall be able to receive the groupcast keys for the SLPP signaling from the network (PKMF/DDNMF/PCF).

The UE shall be able to protect the groupcast signaling message with the groupcast key received from the network.

The UE shall be able to verify the received groupcasted signaling message with the groupcast key received from the network.

For the PKMF/DDNMF/PCF side:
The PKMF/DDNMF/PCF shall be able to understand the request from the UE for generating/providing the groupcast keys for the SLPP signaling.
The PKMF/DDNMF/PCF shall be able to check with the ranging/SL positioning server for authorizing whether the UE is allowed to groupcast or receive the groupcasted SLPP signaling for a specific ranging/SL positioning group.
The PKMF/DDNMF/PCF shall be able to generate and store the groupcast keys for the SLPP signaling for the specific ranging/SL positioning group.
The PKMF/DDNMF/PCF shall be able to provide the groupcast keys for the SLPP signaling for the specific ranging/SL positioning group to the requesting UE.
The PKMF/DDNMF/PCF shall be able to request the groupcast keys for the SLPP signaling from another PKMF/DDNMF/PCF based on the authorization result and store the keys.
The PKMF/DDNMF/PCF shall be able to provide the groupcast keys for the SLPP signaling to another PKMF/DDNMF/PCF based on the authorization result.

For the ranging/SL positioning server side:
The ranging/SL positioning server shall be able to authorize that a specific UE is allowed to groupcast or receive the groupcasted SLPP signaling for a specific ranging/SL positioning group.
The ranging/SL positioning server shall be able to check whether a pair of UEs (G-UE, R-UE) are a match for groupcasting and receiving the groupcasted SLPP signaling for the specific ranging/SL positioning group.
The ranging/SL positioning server shall be able to provide to the PKMF/DDNMF/PCF the authorization result and/or information of a groupcaster (i.e., the sender of the groupcast message) of the specific ranging/SL positioning group.

As shown in FIG. 8, the embodiments of the present disclosure provide an apparatus for processing information. The apparatus includes: a first sending module 110, configured to send a first request message to a first network device, in which the first request message includes ID information of the UE; and a first receiving module 120, configured to receive a first response message from the first network device, in which the first response message includes a security key, and the security key is configured to protect a groupcast message of a ranging/SL positioning application.

The apparatus for processing information in the embodiments of the present disclosure may be a UE, which may be any terminal that requests or expects to act as the G-UE or R-UE.

In some embodiments, the first sending module 110 and the first receiving module 120 may be program modules. When the program modules are executed by a processor, the above operations may be realized.

In other embodiments, the first sending module 110 and the first receiving module 120 may be software-hardware combined modules. The software-hardware combined modules include, but are not limited to, various programmable arrays. The programmable array includes, but is not limited to, a field-programmable array and/or a complex programmable array.

In other embodiments, the first sending module 110 and the first receiving module 120 may be pure hardware modules. The pure hardware module includes, but is not limited to, an application specific integrated circuit.

It may be understood that the first request message further includes: indication information, and/or a group ID, and/or a service code of the ranging/SL positioning application, in which the indication information indicates a role that the UE expects to act, in which the role includes: a sender of the groupcast message; and/or a receiver of the groupcast message.

It may be understood that, in a case that the UE is authorized to perform the ranging/SL positioning application, the first response message includes the security key.

It may be understood that, in a case that the UE is authorized to perform the ranging/SL positioning application and act an expected role, the first response message includes the security key.

It may be understood that the apparatus also includes: a protecting module, configured to, in a case that the UE acts as a sender of the groupcast message, perform integrity protection and/or encryption protection on the groupcast message based on the security key; and the first sending module 110, further configured to groupcast the groupcast message on which the integrity protection and/or the encryption protection are performed by using the security key.

It may be understood that the groupcast message that is integrity protected includes an MAC or a digital signature, in which the MAC or the digital signature is used by a receiver of the groupcast message to perform integrity verification on the groupcast message.

In some embodiments, the first receiving module 120 is configured to, in a case that the UE acts as a receiver of the groupcast message, receive the groupcast message; and a performing module, configured to perform integrity verification on and/or decrypting the groupcast message using the security key.

It may be understood that the groupcast message includes: a group ID; a groupcast signaling; and a key ID used by a receiver of the groupcast message to determine a security key for verifying the groupcast message.

It may be understood that, in a case that the UE is a sender of the groupcast message, the security key is a private key in an asymmetric key pair; or in a case that the UE is a receiver of the groupcast message, the security key is a public key in an asymmetric key pair.

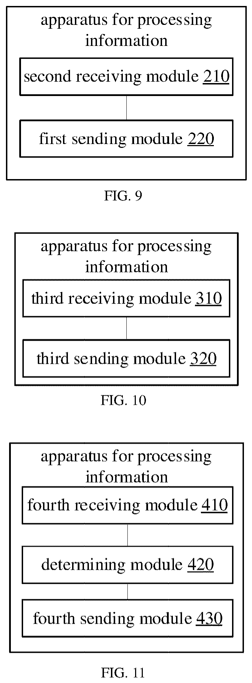

As shown in FIG. 9, the embodiments of the present disclosure provide an apparatus for processing information. The apparatus includes: a second receiving module 210, configured to receive a first request message sent by UE, in which the first request message includes ID information of the UE; and a second sending module 220, configured to a first response message to the UE, in which the first response message includes a security key, and the security key is configured to perform security protection on a groupcast message when the UE performs a ranging/SL positioning application.

The apparatus for processing information in the embodiments of the present disclosure may be a first network device, which may be a serving core network device for the UE that requests or expects to act as the G-UE or R-UE. The core network device includes, but is not limited to, the DDNMF/PKMF/PCF.

In some embodiments, the second receiving module 210 and the second sending module 220 may be program modules. When the program modules are executed by a processor, the above operations may be realized.

In other embodiments, the second receiving module 210 and the second sending module 220 may be software-hardware combined modules. The software-hardware combined modules include, but are not limited to, various programmable arrays. The programmable array includes, but is not limited to, a field-programmable array and/or a complex programmable array.

In other embodiments, the second receiving module 210 and the second sending module 220 may be pure hardware modules. The pure hardware module includes, but is not limited to, an application specific integrated circuit.

It may be understood that the first request message further includes: indication information, and/or a group ID, and/or a service code of the ranging/SL positioning application, in which the indication information indicates a role that the UE expects to act, in which the role includes: a sender of the groupcast message; and/or a receiver of the groupcast message.

It may be understood that the method also includes: determining that the UE is authorized to perform the ranging/SL positioning application according to the ID information; sending the first response message to the UE includes: in a case that the UE is authorized to perform the ranging/SL positioning application, sending the first response message including the security key to the UE.

It may be understood that the apparatus also includes: a determining module, configured to determine that the UE is authorized to act an expected role according to the ID information and the indication information, in which the expected role is a role that the UE expects to act when the UE is authorized to perform the ranging/SL positioning application; and the second sending module, configured to, in a case that the UE is authorized to act the expected role, send the first response message including the security key to the UE.

It may be understood that the second sending module is configured to send a second request message to a ranging/SL positioning server, in which the second request message at least includes: the ID information of the UE; or the ID information and the indication information, in which the indication information indicates a role that the UE expects to act; and the second receiving module, configured to receive a second response message sent by the ranging/SL positioning server, in which the second response message indicates that the UE is authorized to perform the ranging/SL positioning application or to act the expected role, in which the expected role is a role that the UE expects to act when the UE is authorized to perform the ranging/SL positioning application.

It may be understood that, in a case that the UE is authorized to perform the ranging/SL positioning application or to act the expected role, the second response message further includes: sender information of the groupcast message, in which the sender information is used by the first network device to determine a second network device configured to obtain the security key.

It may be understood that the apparatus also includes: a generating module, configured to, in a case that the UE acts as a sender of the groupcast message, generate the security key; or an obtaining module, configured to, in a case that the UE acts as a receiver of the groupcast message, obtain a security key of the sender of the groupcast message.

It may be understood that the obtaining module is configured to, in a case that the UE acts as the receiver of the groupcast message, obtain the security key of the sender stored by the first network device when both the sender of the groupcast message indicated by sender information and the receiver of the groupcast message are associated with the first network device.

It may be understood that the obtaining module is configured to, in a case that the sender of the groupcast message indicated by sender information is associated with the second network device, send a third request message to the second network device; and receive a third response message returned by the second network device, in which the third response message includes the security key of the sender.

As shown in FIG. 10, the embodiments of the present disclosure provide an apparatus for processing information. The apparatus includes: a third receiving module 310, configured to receive a third request message sent by a first network device; and a third sending module 320, configured to send a third response message to the first network device according to the third request message, in which the third response message includes a security key, in which the security key is configured to protect a groupcast message of a ranging/SL positioning application.

The apparatus for processing information may be a second network device, for example, the DDNMF/PKMF/PCF of the G-UE.

In some embodiments, the third receiving module 310 and the third sending module 320 may be program modules. When the program modules are executed by a processor, the above operations may be realized.

In other embodiments, the third receiving module 310 and the third sending module 320 may be software-hardware combined modules. The software-hardware combined modules include, but are not limited to, various programmable arrays. The programmable array includes, but is not limited to, a field-programmable array and/or a complex programmable array.

In other embodiments, the third receiving module 310 and the third sending module 320 may be pure hardware modules. The pure hardware module includes, but is not limited to, an application specific integrated circuit.

It may be understood that the third request message at least includes: ID information of a receiver; and sending the third response message to the first network device according to the third request message includes: sending a fourth request message to a ranging/SL positioning server according to the third request message, in which the fourth request message includes: the ID information of the receiver and ID information of a sender of the groupcast message; receiving a fourth response message sent by the ranging/SL positioning server; and sending the third response message to the first network device according to the fourth response message.

In some embodiments, the third sending module 320 is configured to, in a case that the fourth response message indicates that authorization is passed, send the third response message including a security key of the sender to the first network device.

As shown in FIG. 11, the embodiments of the present disclosure provide an apparatus for processing information. The apparatus includes: a fourth receiving module 410, configured to receive a second request message sent by a first network device, in which the second request message includes ID information of a UE; and a determining module 420, configured to determine whether the UE is authorized to perform a ranging/SL positioning application or to act an expected role according to the second request message, in which the expected role is a role that the UE expects to act when the UE is authorized to perform the ranging/SL positioning application; and a fourth sending module 430, configured to, in a case that the UE is authorized to perform the ranging/SL positioning application or to act the expected role, send a second response message to the first network device.

In some embodiments, the fourth sending module 410, the determining module 420, and the fourth sending module 430 may be program modules. When the program modules are executed by a processor, the above operations may be realized.

In other embodiments, the fourth sending module 410, the determining module 420, and the fourth sending module 430 may be software-hardware combined modules. The software-hardware combined modules include, but are not limited to, various programmable arrays. The programmable array includes, but is not limited to, a field-programmable array and/or a complex programmable array.

In other embodiments, the fourth sending module 410, the determining module 420, and the fourth sending module 430 may be pure hardware modules. The pure hardware module includes, but is not limited to, an application specific integrated circuit.

It may be understood that the fourth sending module 430 is configured to, in a case that the UE acts as a receiver of the groupcast message, sending the second response message to the first network device, in which the second response message at least includes: information of the receiver and verification indication that the UE is authorized to act as the receiver.

It may be understood that the fourth receiving module 410 is configured to, receive a fourth request message sent by a second network device, in which the fourth request message includes: ID information of the receiver and ID information of a sender of the groupcast message; the determining module 420 is configured to determine whether the receiver is authorized to perform the ranging/SL positioning application, or to receive the groupcast message sent by the sender when the sender performs the ranging/SL positioning application, according to the ID information of the receiver and the ID information of the sender; and the fourth sending module 430 is configured to, in a case that the receiver is authorized to perform the ranging/SL positioning application, or to receive the groupcast message sent by the sender when the sender performs the ranging/SL positioning application, send a fourth response message to the first network device.

The embodiments of the present disclosure provide a method for processing information, including: sending, by UE, a first request message to a first network device, in which the first request message includes ID information of the UE; receiving, by the first network device, the first request message sent by the UE, in which the first request message includes the ID information of the UE; sending, by the first network device, a first response message to the UE, in which the first response message includes a security key, and the security key is configured to protect a groupcast message performing a ranging/SL positioning application; and receiving, by the UE, the first response message from the first network device, in which the first response message includes the security key, and the security key is configured to protect the groupcast message associated when the UE performs the ranging/SL positioning application.

The method for processing information may be executed by a communication system. The communication system may include the UE and the first network device. Further, the communication system may also include the UE, the first network device, and the second network device and/or the ranging/SL positioning server.

For descriptions related to the first request message, the first response message, the security key, the groupcast message herein reference may be made to the relevant embodiments, and details will not be repeated here.

It may be understood that the method also includes: sending, by the first network device, a second request message to a ranging/SL positioning server, in which the second request message at least includes: the ID information of the UE; or the ID information and the indication information, in which the indication information indicates a role that the UE expects to act; receiving, by the ranging/SL positioning server, the second request message sent by the first network device, in which the second request message includes the ID information of the UE; determining, by the ranging/SL positioning server, whether the UE is authorized to perform the ranging/SL positioning application or to act an expected role according to the second request message, in which the expected role is a role that the UE expects to act when the UE is authorized to perform the ranging/SL positioning application; sending, by the ranging/SL positioning server, in a case that the UE is authorized to perform the ranging/SL positioning application or to act the expected role, a second response message to the first network device; and receiving, by the first network device, a second response message sent by the ranging/SL positioning server, in which the second response message indicates that the UE is authorized to perform the ranging/SL positioning application or to act the expected role, in which the expected role is the role that the UE expects to act when the UE is authorized to perform the ranging/SL positioning application.

It may be understood that the method also includes: sending, by the first network device, in a case that the sender of the groupcast message indicated by sender information is associated with a second network device, a third request message to the second network device; receiving, by the second network device, the third request message sent by the first network device; sending, by the second network device, a third response message to the first network device according to the third request message, in which the third response message includes a security key of the sender, in which the sender is UE that sends the groupcast message when performing the ranging/SL positioning application; and receiving, by the first network device, the third response message returned by the second network device, in which the third response message includes the security key of the sender.

The embodiments of the present disclosure provide a communication device, including: a memory for storing instructions executable by a processor; and a processor, connected to the memory, in which the processor is configured to implement the method for processing information in any one of the above technical solutions.

The processor may include various types of storage media. The storage medium is a non-transitory computer storage medium capable of storing information stored thereon after the communication device powers off.

The communication device includes: UE or a network device. The network device may include: the first network device, the second network device, and/or the ranging/SL positioning server.

The processor may be connected to the memory via a bus for reading executable programs stored in the memory, such as, at least one of methods shown in FIGs. 2A to 2C, 3A to 3C, 4A to 4B, 5A to 5C, or FIG. 6.

The embodiments of the present disclosure provide a communication system, including: a UE, configured to implement any one of methods for processing information executed by the UE; a first network device, configured to implement any one of methods for processing information executed by a first network device; a second network device, configured to implement any one of methods for processing information executed by a second network device; and a ranging/SL positioning server, configured to implement any one of methods for processing information executed by a ranging/SL positioning server.

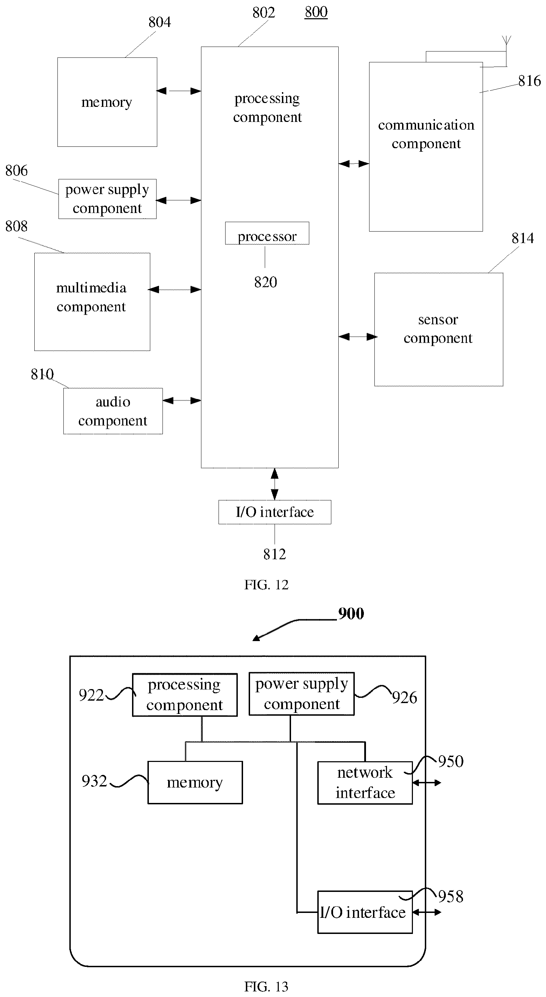

FIG. 12 is a block diagram of UE 800 according to an exemplary embodiment of the present disclosure. For example, the UE 800 may be a mobile phone, a computer, a digital broadcast user device, a message sending and receiving device, a game console, a tablet device, a medical device, a fitness device, a personal digital assistant, etc.

Referring to FIG. 12, the UE 800 may include one or more of: a processing component 802, a memory 804, a power supply component 806, a multimedia component 808, an audio component 810, an input/output (I/O) interface 812, a sensor component 814, and a communication component 816.

The processing component 802 typically controls the overall operation of the UE 800, such as those associated with a display, a telephone call, a data communication, a camera operation, and a recording operation. The processing component 802 may include one or more processors 820 to execute instructions to generate all or part of steps of the above methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of these data include instructions of any application or method used to operate on the UE 800, contact data, phone book data, messages, pictures, videos, etc. The memory 804 may be implemented by any type of volatile or non-volatile memory or their combination, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 806 provides power to the various components of the UE 800. The power supply component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a TP, the screen may be a touch screen to receive signals input by the user. The touch panel includes one or more touch sensors to sense a touch, swiping, and gesture on the touch panel. The touch sensor may not only sense the boundary of a touch or sliding action, but also detect the duration and pressure associated with the touch or sliding operation. In some embodiments, the multimedia component 808 includes a front camera and/or a rear camera. When the UE 800 is in an operating mode, such as a shooting mode or a video mode, the front camera and/or the rear camera may receive external multimedia data. Each of the front camera or the rear camera may be a fixed optical lens system or has a focal length and an optical zoom capability.

The audio component 810 is configured to output and/or input audio signals. For example, the audio component 810 includes a microphone (MIC) that is configured to receive external audio signals when the UE 800 is in an operational mode, such as a call mode, a recording mode, and a speech recognition mode. The received audio signal may be further stored in the memory 804 or transmitted via a communication component 816. In some embodiments, the audio component 810 also includes a speaker for the output of an audio signal.

The I/O interface 812 provides an interface between the processing component 802 and the peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects of the UE 800. For example, the sensor component 814 may detect an on/off state of the equipment 800, and a relative positioning of the component. For example, the component is a display and a keypad of the UE 800, the sensor component 814 may also detect a change of the position of the UE 800 or a change of one component of the UE 800, detect a presence or an absence of a contact between the user and with the UE 800, detect a direction of the UE 800, or detect an acceleration/deceleration and detect a temperature change of the UE 800. The sensor component 814 may include a proximity sensor configured to detect the presence of nearby objects without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the UE 800 and other devices. The UE 800 may access a wireless network based on a communication standard, such as WiFi, 2G or 3G, or their combination. In an exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In exemplary embodiments, a non-transitory computer readable storage medium including instructions is also provided, such as a memory 804 including instructions. The instructions may be executed by the processor 820 of the UE 800 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

As shown in FIG. 13, the embodiments of the present disclosure provide a structure of a network device. Referring to FIG. 13, the communication device 900 includes a processing component 922, which further includes one or more processors, and a memory resource represented by the memory 932 for storing instructions executable by the processing component 922, such as an application program. The application program stored in memory 932 may include one or more modules, in which each module corresponds to a set of instructions. In addition, the processing component 922 is configured to execute instructions to execute any one of the above methods that may be applied to the access device, such as any one of the methods shown in FIGs. 2A to 2C, FIGs. 3A to 3C, FIGs. 4A to 4B, FIGs. 5A to 5C, or FIG. 6.

The communication device 900 may also include a power supply component 926 configured to perform power management for the communication device 900, a wired or wireless network interface 950 configured to connect the communication device 900 to the network, and an I/O interface 958. The communication device 900 may operate an operating system stored on the memory 932, such as a Windows Server ^{™}, a Mac OS X^{™}, a Unix^{™}, a Linux^{™}, a FreeBSD^{™}, and the like.

Other embodiments of the present disclosure will be apparent to those skilled in the art from consideration of the specification and practice of the present disclosure disclosed here. This application is expected to cover any variations, uses, or adaptations of the embodiments of the present disclosure, which follow the general principles of the embodiments of the present disclosure and include common knowledge or conventional technical means in the related art not disclosed in the present disclosure. It is expected that the specification and examples be considered as exemplary only, with a true scope and spirit of the present disclosure being indicated by the following claims.

It will be appreciated that the present disclosure is not limited to the exaction construction that has been described above and illustrated in the accompanying drawings, and that various modifications and changes may be made without departing from the scope of the disclosure. It is expected that the scope of the present disclosure is only limited by the appended claims.

## Claims

1. A method for processing information, performed by a user equipment (UE), the method comprising:
sending a first request message to a first network device, wherein the first request message comprises identifier (ID) information of the UE; and
receiving a first response message from the first network device, wherein the first response message comprises a security key, and the security key is configured to protect a groupcast message of a ranging/sidelink (SL) positioning application.

2. The method of claim 1, wherein the first request message further comprises: indication information, and/or a group ID, and/or a service code of the ranging/SL positioning application,
wherein the indication information indicates a role that the UE expects to act, wherein the role comprises: a sender of the groupcast message; and/or a receiver of the groupcast message.

3. The method of claim 1 or 2, wherein in a case that the UE is authorized to perform the ranging/SL positioning application, the first response message comprises the security key.

4. The method of claim 3, wherein in a case that the UE is authorized to perform the ranging/SL positioning application and act an expected role, the first response message comprises the security key.

5. The method of any one of claims 1 to 4, further comprising:
in a case that the UE acts as a sender of the groupcast message, performing integrity protection and/or encryption protection on the groupcast message based on the security key; and
groupcasting the groupcast message on which the integrity protection and/or the encryption protection are performed by using the security key.

6. The method of claim 5, wherein the groupcast message that is integrity protected comprises a message authentication code (MAC) or a digital signature, wherein the MAC or the digital signature is used by a receiver of the groupcast message to perform integrity verification on the groupcast message.

7. The method of any one of claims 1 to 4, further comprising:
in a case that the UE acts as a receiver of the groupcast message, receiving the groupcast message; and
performing integrity verification on and/or decrypting the groupcast message using the security key.

8. The method of any one of claims 1 to 7, wherein the groupcast message comprises: a group ID; a groupcast signaling; and a key ID used by a receiver of the groupcast message to determine a security key for verifying the groupcast message.

9. The method of any one of claims 1 to 8, wherein
in a case that the UE is a sender of the groupcast message, the security key is a private key in an asymmetric key pair; or
in a case that the UE is a receiver of the groupcast message, the security key is a public key in an asymmetric key pair.

10. A method for processing information, performed by a first network device, the method comprising:
receiving a first request message sent by a user equipment (UE), wherein the first request message comprises identifier (ID) information of the UE; and
sending a first response message to the UE, wherein the first response message comprises a security key, and the security key is configured to protect a groupcast message performing a ranging/sidelink (SL) positioning application.

11. The method of claim 10, wherein the first request message further comprises: indication information, and/or a group ID, and/or a service code of the ranging/SL positioning application,
wherein the indication information indicates a role that the UE expects to act, wherein the role comprises: a sender of the groupcast message; and/or a receiver of the groupcast message.

12. The method of claim 10 or 11, further comprising:
determining that the UE is authorized to perform the ranging/SL positioning application according to the ID information;
wherein sending the first response message to the UE comprises:
in a case that the UE is authorized to perform the ranging/SL positioning application, sending the first response message comprising the security key to the UE.

13. The method of claim 10 or 11, further comprising:
determining that the UE is authorized to act an expected role according to the ID information and the indication information, wherein the expected role is a role that the UE expects to act when the UE is authorized to perform the ranging/SL positioning application;
wherein sending the first response message to the UE comprises:
in a case that the UE is authorized to act the expected role, sending the first response message comprising the security key to the UE.

14. The method of claim 13, wherein determining that the UE is authorized to perform the ranging/SL positioning application according to the ID information, or verifying that the UE is authorized to act the expected role according to the indication information, comprises:
sending a second request message to a ranging/SL positioning server, wherein the second request message at least comprises: the ID information of the UE; or the ID information and the indication information, wherein the indication information indicates a role that the UE expects to act; and
receiving a second response message sent by the ranging/SL positioning server, wherein the second response message indicates that the UE is authorized to perform the ranging/SL positioning application or to act the expected role, wherein the expected role is a role that the UE expects to act when the UE is authorized to perform the ranging/SL positioning application.

15. The method of claim 14, wherein
in a case that the UE is authorized to perform the ranging/SL positioning application or to act the expected role, the second response message further comprises: sender information of the groupcast message, wherein the sender information is used by the first network device to determine a second network device configured to obtain the security key.

16. The method of any one of claims 10 to 15, further comprising:
in a case that the UE acts as a sender of the groupcast message, generating the security key;
or
in a case that the UE acts as a receiver of the groupcast message, obtaining a security key of the sender of the groupcast message.

17. The method of claim 16, wherein in a case that the UE acts as the receiver of the groupcast message, obtaining the security key of the sender of the groupcast message comprises:
in a case that the UE acts as the receiver of the groupcast message, obtaining the security key of the sender stored by the first network device when both the sender of the groupcast message indicated by sender information and the receiver of the groupcast message are associated with the first network device.

18. The method of claim 16, wherein obtaining the security key of the sender stored by the first network device when the UE is authorized to act as the receiver of the groupcast message comprises:
in a case that the sender of the groupcast message indicated by sender information is associated with the second network device, sending a third request message to the second network device; and
receiving a third response message returned by the second network device, wherein the third response message comprises the security key of the sender.

19. A method for processing information, performed by a second network device, the method comprising:
receiving a third request message sent by a first network device; and
sending a third response message to the first network device according to the third request message, wherein the third response message comprises a security key, and the security key is configured to protect a groupcast message of a ranging/sidelink (SL) positioning application.

20. The method of claim 19, wherein the third request message at least comprises: identifier (ID) information of a receiver;
wherein sending the third response message to the first network device according to the third request message comprises:
sending a fourth request message to a ranging/SL positioning server according to the third request message, wherein the fourth request message comprises: the **ID** information of the receiver and **ID** information of a sender of the groupcast message;
receiving a fourth response message sent by the ranging/SL positioning server; and
sending the third response message to the first network device according to the fourth response message.

21. The method of claim 20, wherein sending the third response message to the first network device according to the fourth response message comprises:
in a case that the fourth response message indicates that authorization is passed, sending the third response message comprising a security key of the sender to the first network device.

22. A method for processing information, performed by a ranging/sidelink (SL) positioning server, the method comprising:
receiving a second request message sent by a first network device, wherein the second request message comprises identifier (ID) information of a user equipment (UE);
determining whether the UE is authorized to perform a ranging/sidelink (SL) positioning application or to act an expected role according to the second request message, wherein the expected role is a role that the UE expects to act when the UE is authorized to perform the ranging/SL positioning application; and
in a case that the UE is authorized to perform the ranging/SL positioning application or to act the expected role, sending a second response message to the first network device.

23. The method of claim 22, wherein in a case that the UE is authorized to perform the ranging/SL positioning application or to act the expected role, sending the second response message to the first network device comprises:
in a case that the UE acts as a receiver of a groupcast message, sending the second response message to the first network device according to a first authorization result and sender information of the groupcast message, wherein the second response message comprises: the sender information and an authorization indication indicating that the UE is authorized to act as the receiver.

24. The method of claim 22 or 23, further comprising:
receiving a fourth request message sent by a second network device, wherein the fourth request message comprises: ID information of the receiver and ID information of a sender of the groupcast message;
determining whether the receiver is authorized to perform the ranging/SL positioning application, or to receive the groupcast message sent by the sender when the sender performs the ranging/SL positioning application, according to the **ID** information of the receiver and the **ID** information of the sender; and
in a case that the receiver is authorized to perform the ranging/SL positioning application, or to receive the groupcast message sent by the sender when the sender performs the ranging/SL positioning application, sending a fourth response message to the first network device.

25. An apparatus for processing information, comprising:
a first sending module, configured to send a first request message to a first network device, wherein the first request message comprises identifier (ID) information of a user equipment (UE); and
a first receiving module, configured to receive a first response message from the first network device, wherein the first response message comprises a security key, and the security key is configured to protect a groupcast message of a ranging/sidelink (SL) positioning application.

26. An apparatus for processing information, comprising:
a second receiving module, configured to receive a first request message sent by a user equipment (UE), wherein the first request message comprises identifier (ID) information of the UE; and
a second sending module, configured to a first response message to the UE, wherein the first response message comprises a security key, and the security key is configured to perform security protection on a groupcast message when the UE performs a ranging/sidelink (SL) positioning application.

27. An apparatus for processing information, comprising:
a third receiving module, configured to receive a third request message sent by a first network device; and
a third sending module, configured to send a third response message to the first network device according to the third request message, wherein the third response message comprises a security key, wherein the security key is configured to protect a groupcast message of a ranging/sidelink (SL) positioning application.

28. An apparatus for processing information, comprising:
a fourth receiving module, configured to receive a second request message sent by a first network device, wherein the second request message comprises identifier (ID) information of a user equipment (UE);
a determining module, configured to determine whether the UE is authorized to execute a ranging/sidelink (SL) positioning application or to act an expected role according to the second request message, wherein the expected role is a role that the UE expects to act when the UE is authorized to perform the ranging/SL positioning application; and
a fourth sending module, configured to, in a case that the UE is authorized to perform the ranging/SL positioning application or to act the expected role, send a second response message to the first network device.

29. A method for processing information, comprising:
sending, by a user equipment (UE), a first request message to a first network device, wherein the first request message comprises identifier (ID) information of the UE;
receiving, by the first network device, the first request message sent by the UE, wherein the first request message comprises the ID information of the UE;
sending, by the first network device, a first response message to the UE, wherein the first response message comprises a security key, and the security key is configured to protect a groupcast message performing a ranging/sidelink (SL) positioning application; and
receiving, by the UE, the first response message from the first network device, wherein the first response message comprises the security key, and the security key is configured to protect the groupcast message associated when the UE performs the ranging/SL positioning application.

30. The method of claim 29, further comprising:
sending, by the first network device, a second request message to a ranging/SL positioning server, wherein the second request message at least comprises: the ID information of the UE; or the ID information and the indication information, wherein the indication information indicates a role that the UE expects to act;
receiving, by the ranging/SL positioning server, the second request message sent by the first network device, wherein the second request message comprises the ID information of the UE;
determining, by the ranging/SL positioning server, whether the UE is authorized to perform the ranging/SL positioning application or to act an expected role according to the second request message, wherein the expected role is a role that the UE expects to act when the UE is authorized to perform the ranging/SL positioning application;
sending, by the ranging/SL positioning server, in a case that the UE is authorized to perform the ranging/SL positioning application or to act the expected role, a second response message to the first network device; and
receiving, by the first network device, the second response message sent by the ranging/SL positioning server, wherein the second response message indicates that the UE is authorized to perform the ranging/SL positioning application or to act the expected role, wherein the expected role is the role that the UE expects to act when the UE is authorized to perform the ranging/SL positioning application.

31. The method of claim 29 or 30, further comprising:
sending, by the first network device, in a case that a sender of the groupcast message indicated by sender information is associated with a second network device, a third request message to the second network device;
receiving, by the second network device, the third request message sent by the first network device;
sending, by the second network device, a third response message to the first network device according to the third request message, wherein the third response message comprises a security key of the sender, wherein the sender is a UE that sends the groupcast message when performing the ranging/SL positioning application; and
receiving, by the first network device, the third response message returned by the second network device, wherein the third response message comprises the security key of the sender.

32. A communication system, comprising:
a user equipment (UE), configured to implement the method of any one of claims 1 to 9;
a first network device, configured to implement the method of any one of claims 10 to 18;
a second network device, configured to implement the method of any one of claims 19 to 21; and
a ranging/sidelink (SL) positioning server, configured to implement the method of any one of claims 22 to 24.

33. A communication device, comprising a processor, a transceiver, a memory, and an executable program stored on the memory and executable by the processor, wherein when the executable program is executed by the processor, the method of any one of claims 1 to 9, 10 to 18, 19 to 21, 22 to 24, or 29 to 31 is implemented.

34. A computer storage medium for storing an executable program, wherein when the executable program is executed by the processor, the method of any one of claims 1 to 9, 10 to 18, 19 to 21, 22 to 24, or 29 to 31 is implemented.
